# EUROPEAN PATENT APPLICATION

(11) **EP 1 808 980 A1**
(43) Date of publication of application: **18.07.2007**
(21) Application number: 06024689.9
(22) Date of filing: 29.11.2006
(51) Int. Cl.: H04L 12/24

(54) **System and method for diagnosis of misconfigurations in ethernet networks**

(30) Priority: 15.12.2005 US 304845
(71) Applicant: Alcatel Lucent, 75008 Paris (FR)
(72) Inventor: Maher, Ali, Plano, TX 75023 (US); Rouyer, Jessy V., FT. Worth, TX 76110-3034 (US); Sridhar, Kamakshi, Plano, TX 75093 (US); Tancevski, Ljubisa, Dallas, TX 75205 (US)
(74) Representative: Schäfer, Wolfgang

(57) **Abstract**

System and method for diagnosing misconfigurations in a network are described. In one embodiment, the method comprises querying a network element for a current value of at least one parameter; determining an optimal value of the at least one parameter; comparing the current value of the at least one parameter with the optimal value of the at least one parameter; and providing a notification if a discrepancy exists between the optimal value of the at least one parameter and the current value of the at least one parameter.

## Description

### BACKGROUND OF THE INVENTION

### Technical Field of the Invention

The present invention generally relates to Ethernet networks. More particularly, and not by way of any limitation, the present invention is directed to system and method for diagnosing misconfigurations in such networks.

### Description of Related Art

In any network, various network parameters will have to be configured in order to provide efficient and optimal network operation. This is also true with respect to Ethernet networks; however, the situation with respect to Ethernet networks is somewhat more unique. In particular, although Ethernet supports plug-and-play operation, some level of configuration must be performed to achieve efficient levels of performance, especially in carrier grade Ethernet networks. This situation is not dissimilar from those to which operators are accustomed in other networks currently employed, except that Ethernet brings with it an entirely new philosophy of operation, as well as an entirely new set of parameters that need to be configured and with which operators might not be well-acquainted. This translates to a higher likelihood that Ethernet network parameters will be either wrongly configured or misconfigured.

Currently, when an Ethernet network is improperly configured, it can be difficult to detect and correct the misconfiguration before it negatively impacts the network. Specifically, those misconfigurations that result in sub-optimal network operation, as opposed to a catastrophic outcome, are particularly difficult to detect. Catastrophic outcome is typically due to link or fabric failure and is detected and corrected by Operation, Administration and Maintenance ("OAM") mechanisms. As used herein, sub-optimal operation encompasses both situations in which a network is functioning in a sub-optimal manner and situations in which a network is currently functioning in an optimal manner, but in which there is potential for problems upon reconfiguration or topology change (due to the addition/removal of elements/links) in the future.

As previously noted, a misconfiguration will typically be detected only after it has caused potentially serious network problems, at which point, an attempt will be made to correct the misconfiguration. Thus, diagnosis and correction of misconfigurations are reactive, rather than proactive; as a result, they can result in substantial expense to the network operator.

### SUMMARY OF THE INVENTION

One embodiment is a method of diagnosing misconfigurations in a network. The method comprises querying a network element for a current value of at least one parameter; determining an optimal value of the at least one parameter; comparing the current value of the at least one parameter with the optimal value of the at least one parameter; and providing a notification if a discrepancy exists between the optimal value of the at least one parameter and the current value of the at least one parameter.

Another embodiment is a system for diagnosing misconfigurations in a network. The system comprises means for querying a network element for a current value of at least one parameter; means for determining an optimal value of the at least one parameter; means for comparing the current value of the at least one parameter with the optimal value of the at least one parameter; and means for providing a notification if a discrepancy exists between the optimal value of the at least one parameter and the current value of the at least one parameter.

Yet another embodiment is a system for diagnosing misconfigurations in a network. The system comprises a network element query module for querying a network element for a current value of at least one parameter; a topology analysis module for analyzing a topology of the network to determine an optimal value of the at least one parameter; and a comparison module for comparing the current value of the at least one parameter with the optimal value of the at least one parameter and for providing a notification if a discrepancy exists between the optimal value of the at least one parameter and the current value of the at least one parameter.

### BRIEF DESCRIPTION OF THE DRAWINGS

A more complete understanding of the present invention may be had by reference to the following Detailed Description when taken in conjunction with the accompanying drawings wherein:

FIG. 1 is a block diagram of an Ethernet network in which may be implemented a diagnostics mechanism of one embodiment for detecting misconfigurations in the network;

FIG. 2 is a block diagram of a diagnostics mechanism of one embodiment for detecting misconfigurations in an Ethernet network; and

FIG. 3 is a flowchart of the operation of a diagnostics mechanism of one embodiment for detecting misconfigurations in an Ethernet network.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

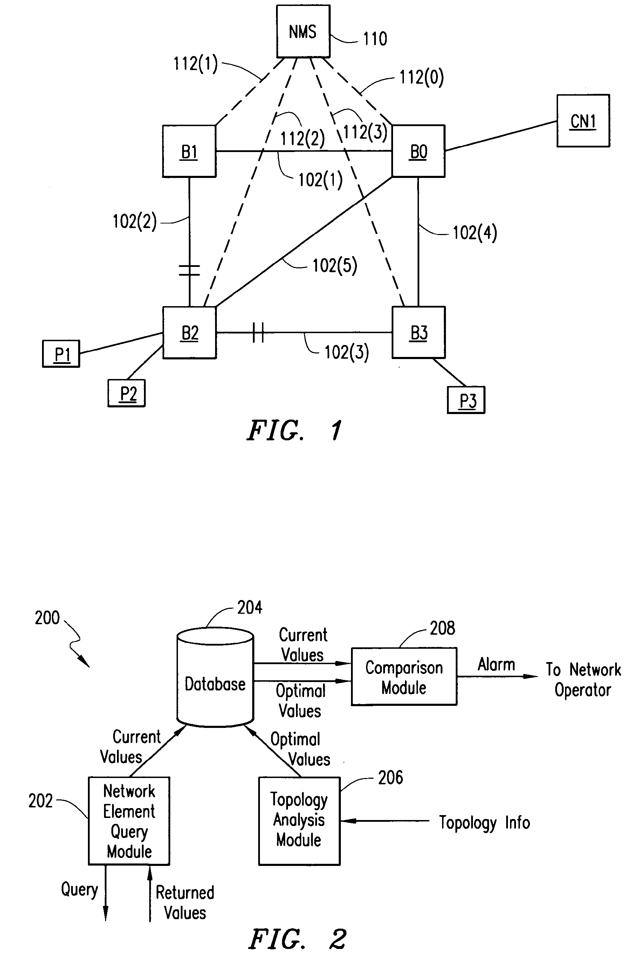

FIG. 1 is a block diagram of an Ethernet network 100 for implementing a diagnostics mechanism of one embodiment. As illustrated in FIG. 1, the network 100 includes a plurality of bridges B0-B3 interconnected by links 102(1)-102(5). One or more end-user devices, such as personal computers ("PCs"), represented in FIG. 1 by end-user devices P1-P3, and/or customer networks, represented in FIG. 1 by a customer network CN1, may also be connected to one or more of the bridges B0-B3 via appropriate connections.

A network management system ("NMS") 110 is connected to a management port of each of the bridges B0-B3 via links 112(0)-112(3) for monitoring the status of the bridges. It will be recognized that no network traffic is transmitted via the links 112(0)-112(3). The network 100 illustrated in FIG. 1 has been configured using a spanning tree protocol ("STP") such that the bridge B0 is the root bridge for the tree and data traffic is not forwarded (i.e., is blocked) at B2 on the links 102(2) and 102(3). It will be recognized that this configuration is exemplary only and that any number of different configuration methods and types may be applied to the network 100.

FIG. 2 is a block diagram of a Network Diagnostics Mechanism ("NDM") 200 in accordance with one embodiment. In one embodiment, the NDM 200 is implemented in the NMS 110, although it is anticipated that this need not necessarily be the case. Referring to FIG. 2, the NDM 200 includes a Network Element Query Module ("NEQM") 202 comprising logic for periodically actively query network elements for their status. This query results in a set of current parameter values, which are stored in a database 204. The NEQM 202 can use the Simple Network Management Protocol ("SNMP"). The parameters that need to be monitored are user-configurable parameters that are typically set either using the Network Management System ("NMS") or through a Command Line Interface ("CLI"). The NEQM 202 can take the form of a script that will periodically open a "telnet" connection to each network element and obtain the status of the parameters that are listed in that script. Alternatively, if these parameters are accessible through the NMS, they can be queried and obtained via SNMP.

A Topology Analysis Module ("TAM") 206 comprises logic for, given a network topology, computing optimal values for the parameters that will optimize the operation of that network. These optimal parameter values are also stored in the database 204. The TAM logic is executed offline. Given a set of network topologies that is derived through the NMS, various algorithms will be invoked to calculate the various parameters. A Comparison Module 208 periodically compares the current parameter values with the optimal values for those parameters to determine whether the values match; i.e., whether the operation of the network is optimized for the current topology. If not, the Comparison Module 208 initiates issuance of a non-binding notification or alarm to the network operator that a misconfiguration has been detected. Suggestions for corrective measures may also be issued with this notification/alarm.

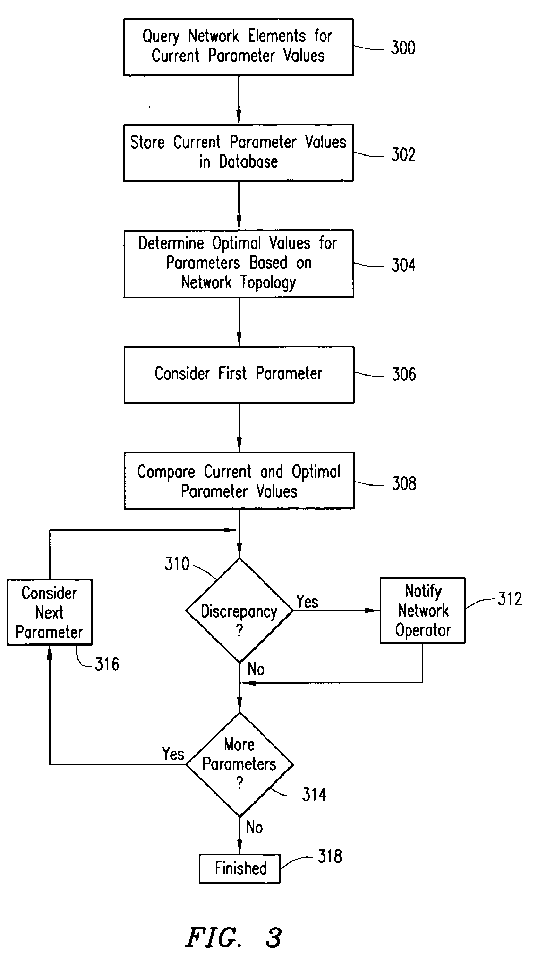

FIG. 3 is a flowchart of an exemplary operation of the NDM 200. First, the NEQM 202 queries network elements for current values for one or more parameters of interest (block 300). The current values for those parameters returned from the network elements are stored in the database 204 (block 302). The TAM 206 determines optimal values for the same parameters of interest based on topology information obtained from the network (block 304). After the current values and optimal values are obtained and stored, a first parameter (or set of related parameters) is considered (block 306) and the current and optimal values for the parameter (or set of parameters) are compared by the comparison module 208 (block 308). If there is a discrepancy between the values(block 310), a notification is provided to the network operator (block 312) who may take steps to remedy the problem. As used herein, a discrepancy encompasses any difference between the two values that falls outside an accepted difference. As previously noted, the notification may include a recommendation as to how the network should be configured so as to optimize operation with respect to the parameter. If there is no discrepancy between the values, a determination is made whether there are more parameters to consider (block 314). If so, the next parameter is considered (block 316) and the process is repeated with respect to that parameter; otherwise, execution terminates (block 318).

It will be recognized that the NDM can be as encompassing as the number of parameters that are subject to analysis can be. A non-exhaustive list of such parameters, along with an explanation of each such parameter, is provided in detail below. It should be recognized that there are other parameters that may also be monitored and that not all of these parameters must be monitored in order to practice the embodiments described herein.

Bridge Identifier: This parameter is used to select a Root Bridge among all bridges in a given topology. This impacts where traffic is directed; therefore, improper configuration thereof could result in bandwidth inefficiency.

Port Path Cost: This parameter affects which port is going to be discarding data traffic (blocked), which impacts traffic distribution. Improper configuration thereof could result in bandwidth inefficiency.

Bridge Max Age: This parameter affects the stability of a Spanning Tree operated via a Spanning Tree Algorithm-based protocol. If the number of bridges in a network is greater than this parameter, there might be instabilities in the network.

Timers: Various protocols depend on timers for their operation. For instance, the Generic Attribute Registration Protocol Virtual Local Area Network Registration Protocol ("GVRP") uses a timer for the garbage collection of some attributes, as well as to declare/register and undeclare/unregister attributes. If these timers are not configured properly, GVRP operation might become erratic.

Quality of Service ("QoS") Code Points: These parameters determine the drop precedence and drop eligibility of frames in an Ethernet network. Improper configuration of these parameters may result in traffic not meeting Service Level Agreements ("SLAs").

Dual Homing: Improper configuration of dual homing operation parameters may result in the flushing of Medium Access Control ("MAC") addresses every time a Topology Change Notification ("TCN") is received, which is unnecessary and can result in needless "broadcasting storms."

VLAN Assignment: If network ports do not have Virtual Local Area Network ("VLAN") identifiers different from those used on access ports, there could be a security risk, as VLAN "hopping attacks" might take place.

Additionally, again with regard to the assignment of VLAN identifiers, it should be noted that "double encapsulated VLAN hopping attacks" take advantage of the way the hardware on some switches operates. In particular, some switches perform only one level of IEEE Std. 802.1Q de-capsulation, which can be exploited by an attacker to illegally change VLAN assignments. The best remedy is to make sure that the native VLAN on "trunk ports" is different than the native VLAN on "user ports".

The following system as well as the following features, separately or in any combination, may also constitute advantageous embodiments of the described or claimed invention:
- A system for diagnosing misconfigurations in a network comprising: means for querying a network element for a current value of at least one parameter; means for determining an optimal value of the at least one parameter; means for comparing the current value of the at least one parameter with the optimal value of the at least one parameter; and means for providing a notification if a discrepancy exists between the optimal value of the at least one parameter and the current value of the at least one parameter.
- The claimed and/or desribed system further comprising means for storing the current value and the optimal value of the at least one parameter.
- The claimed and/or desribed system wherein the means for determining an optimal value of the at least one parameter comprises means for analyzing a topology of the network.
- The claimed and/or desribed system wherein the means for providing a notification comprises suggesting a corrective measure.
- The claimed and/or desribed system wherein the at least one parameter comprises a set of related parameters.
- The claimed and/or desribed system wherein the means for querying comprises a network element query module.
- The claimed and/or desribed system wherein the means for determining comprises a topology analysis module.
- The claimed and/or desribed system wherein the means for comparing comprises a comparison module.
- The claimed and/or desribed system wherein the means for storing comprises a database.
- The claimed and/or desribed system wherein the network comprises an Ethernet network.
- The claimed and/or desribed system wherein the notification includes a suggestion of a corrective measure.
- The claimed and/or desribed system wherein the at least one parameter comprises a set of related parameters.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of diagnosing misconfigurations in a network comprising:
querying a network element for a current value of at least one parameter;
determining an optimal value of the at least one parameter;
comparing the current value of the at least one parameter with the optimal value of the at least one parameter; and
providing a notification if a discrepancy exists between the optimal value of the at least one parameter and the current value of the at least one parameter.

2. The method of claim 1 further comprising storing the current value of the at least one parameter in a database.

3. The method of claim 1 further comprising storing the optimal value of the at least one parameter in a database.

4. The method of claim 1 wherein the determining an optimal value of the at least one parameter comprises analyzing a topology of the network.

5. The method of claim 1 wherein the providing a notification comprises suggesting a corrective measure.

6. The method of claim 1 wherein the at least one parameter comprises a set of related parameters.

7. The method of claim 1 further comprising repeating the querying, determining, comparing, and providing for each of a plurality of parameters of interest.

8. A system for diagnosing misconfigurations in a network comprising:
a network element query module for querying a network element for a current value of at least one parameter;
a topology analysis module for analyzing a topology of the network to determine an optimal value of the at least one parameter; and
a comparison module for comparing the current value of the at least one parameter with the optimal value of the at least one parameter and for providing a notification if a discrepancy exists between the optimal value of the at least one parameter and the current value of the at least one parameter.

9. The system of claim 8 further comprising a database for storing the current value and the optimal value of the at least one parameter.

10. The system of claim 8 wherein the network comprises an Ethernet network.
